# EUROPEAN PATENT APPLICATION

(11) **EP 0 811 569 A1**
(43) Date of publication of application: **10.12.1997**
(21) Application number: 96942587.5
(22) Date of filing: 20.12.1996
(51) Int. Cl.: B65G 59/08, B65G 59/06, B65G 57/00

(54) **PALLET EXCHANGER**

(30) Priority: 26.12.1995 JP 339533/95
(71) Applicant: Kato, Syoji, Nagoya-shi, Aichi 463 (JP)
(72) Inventor: KATO, Syoji, Aichi 463 (JP); TOMONO, Tatsumi 64-3, Yada-machi, 5-chome, Aichi 461 (JP)
(74) Representative: BATCHELLOR, KIRK & CO.
(86) International application number: JP9603721
(87) International publication number: WO9723397

(57) **Abstract**

A pallet exchanger for improving the efficiency of use of respective pallets (33, 34) on a receiver side and a shipper side. A frame (8) having a vertically movable load-carrying platform (12) and a pallet falling port (14) on one side of the load-carrying platform (12) is pivotally mounted upright on an exchanger body (1). A frame turning unit (17) is provided on the exchanger body (1) for making the load-carrying platform (12) of the frame (8) horizontal at the time of loading, and displacing the load-carrying platform (12) into a vertical position and displacing the pallet falling port (14) downward at the time of exchange of pallets. A pallet receiver (26) for receiving a load-carrying pallet (33) falling off the pallet falling port (14) at the time of exchange of pallets if pivotally supported on the exchanger body (1) to be vertically turnable.

## Description

### Technical Filed

The present invention relates to a pallet exchanging apparatus for exchanging at the load-receiving side a load-bearing pallet from the shipper side for an exchange pallet at the load receiving side and placing the load on the exchange pallet.

### Background Art

In a conventional system for shipping a load by using pallets, the load is normally placed on a load-bearing pallet at the shipper side and shipped on the pallet from the shipper side to the load receiving side, where the load is received together with the pallet on which the load is placed. In other words, load-bearing pallets are transported together with their load in a one-way direction from the shipper to the load receiving side.

As a conventional shipping system described above makes it necessary for the shipper to constantly prepare a great number of new pallets, it imposes a great financial burden on the shipper. Meanwhile, load-bearing pallets transported from the shipper continue to accumulate on the load receiving side and occupy a great deal of storage space.

When a large number of used pallets are returned from the load receiving side to the shipper in a lot, they are often inconveniently varied in size. Furthermore, it is not unusual that many of them have become too dilapidated in quality to be used again.

In order to solve the above problems, an object of the present invention is to provide a pallet exchanging apparatus which facilitates a load receiving side to exchange loaded pallets shipped from a shipper for exchange pallets prepared at the load receiving side, thereby permitting the pallets to be used efficiently.

### Disclosure of Invention

A pallet exchanging apparatus according to the present invention comprises a main body of the apparatus; a stand which has a vertically rotatably load-bearing platform for supporting an exchange pallet thereon and a pallet drop opening through which a load-bearing pallet placed on the exchange pallet is dropped, the load-bearing platform attached to the main body of the apparatus by means of a shaft, and the pallet drop opening being located above an end of the load-bearing platform; a stand rotation means which is mounted on the main body of the apparatus and rotates the aforementioned stand so as to move the load-bearing platform of the stand to the horizontal position when loading objects and, when changing pallets, to the vertical position where the pallet drop opening faces downward; and a vertically rotatable pallet receiver attached to the main body of the apparatus by means of shafts, the pallet receiver being so positioned as to face the pallet drop opening and accept a load-bearing pallet dropped through the pallet drop opening when pallets are exchanged.

According to the above configuration, when loading objects, an exchange pallet is placed on the load-bearing platform, and a load-bearing pallet loaded with objects is then conveyed onto the exchange pallet in the state where the stand has been rotated downward around the shaft by means of operation of the stand rotation means so that the load-bearing platform of the stand has reached the horizontal position.

When exchanging pallets, by means of operation of the stand rotation means, the stand is rotated upward around the shaft so that the load-bearing platform of the stand is shifted from the horizontal position to the vertical position with the pallet drop opening facing downward. Together with the upward rotation of the stand, the pallet receiver is rotated upward so that the receiving mouth of the pallet receiver faces the pallet drop opening that faces downward. Then, the load-bearing pallet dropped through the pallet drop opening is received into the pallet receiver.

When the load-bearing pallet has been dropped through the pallet drop opening, the load-bearing platform is advanced so that the exchange pallet on the load-bearing platform comes into contact with the loaded objects, taking the place of the load-bearing pallet. When the stand is then rotated downward around the shaft by the stand rotation means, the objects on the exchange pallet on the load-bearing platform, too, are rotated downward in the state where they are loaded on the exchange pallet.

As the pallet receiver is rotated downward as a result of the downward rotation of the stand, the load-bearing pallet is discharged from the receiving mouth of the pallet receiver onto the main body of the exchanging apparatus. Then, while the exchange pallet is lowered to the loading position with the objects still loaded on the exchange pallet, the load-bearing pallet that has been separated from the objects becomes ready to be transported to the shipper.

Thus, load-bearing pallets shipped from shippers with objects loaded thereon can easily be exchanged at the load receiving side for exchange pallets prepared at the load receiving side. As load-bearing pallets from shippers are exchanged for exchange pallets of the load receiving side and returned to the shippers, the load receiving side is relieved of the problem of load-bearing pallets from shippers being unused and accumulating on the load receiving side. The load-bearing pallets received from the shippers can be reused when transporting objects, and the load receiving side is able to handle objects from the shippers by using their own exchange pallets. The present invention thus permits both the shippers and the load receiving side to use their respective pallets efficiently.

According to a feature of the present invention, the stand is formed in the shape of an L comprising a horizontal base frame and a vertical end frame which is provided with a pallet drop opening, said load-bearing platform being disposed above the horizontal base plate in such a manner as to be capable of being elevated and lowered by a lifter, and the pallet drop opening being formed in the vertical end plate.

Operation of the lifter moves the load-bearing platform moves vertically or horizontally depending on the position of the platform; the load-bearing platform and an exchange pallet loaded thereon are moved up or down when loading objects, and are moved forward when exchanging pallets until the platform comes into contact with the objects with the exchange pallet therebetween. The load-bearing pallet easily falls through the pallet drop opening of the vertical end frame. With the configuration as above, the invention permits objects to be stacked without the danger of collapsing and also prevents objects from collapsing when pallets are exchanged.

According to another feature of the present invention, the lifter has the function of advancing the load-bearing platform when a load-bearing pallet is dropped through the pallet drop opening so that an exchange pallet on the load-bearing platform instead of the load-bearing pallet comes into contact with loaded objects.

As a result, the objects on the exchange pallet are prevented from collapsing when the stand is rotated downward. As the exchange pallet is thus reliably abutted against the load by means of the lifter, the invention also ensures the exchange pallet to be prevented from falling through the pallet drop opening.

According to another feature of the present invention, a movable stopper or stoppers for supporting a load-bearing pallet to be dropped through the pallet drop opening are provided at the pallet drop opening.

By advancing the stopper(s) across the pallet drop opening, a load-bearing pallet is prevented from falling through the pallet drop opening. On the other hand, by moving the stopper(s) away from the pallet drop opening, the load-bearing pallet can easily be dropped through the pallet drop opening. Therefore, by means of a stopper or stoppers, the invention prevents an exchange pallet from accidentally falling through the pallet drop opening and also permits an exchange pallet to be dropped at a desired time.

According to yet another feature of the present invention, the stand rotation means is comprised of hydraulic cylinders so that extension and contraction of rods of the hydraulic cylinders rotates the stand up and down around a rotation axis shaft laid across and attached to the main body of the changing apparatus.

By extending or contracting the rods of the hydraulic cylinders, the stand is smoothly rotated upward or downward around the rotation axis shaft. With the configuration as above, wherein the stand can reliably be shifted between the loading position and the pallet exchanging position, the invention ensures easy exchange of pallets.

According to yet another feature of the present invention, the pallet receiver is so supported by a rotation shaft laid across and attached to the main body of the changing apparatus as to be capable of rotating up and down around the rotation shaft so that the pallet receiver is rotated upward together with downward shifting of the pallet drop opening until the pallet receiver faces the pallet drop opening that has been shifted to the bottom position.

Then, a load-bearing pallet dropped through the pallet drop opening is smoothly received through a receiving mouth of the pallet receiver into the pallet receiver. With the configuration as above, the invention ensures a pallet receiver to reliably receive a load-bearing pallet dropped through the pallet drop opening.

According to yet another feature of the present invention, a pallet exchanging apparatus is provided with a conveyor for carrying load-bearing pallets discharged from the pallet receiver.

In the above configuration, load-bearing pallets discharged from the pallet receiver are carried onto the aforementioned conveyor and wait thereon to be transported to a shipper or shippers. With the configuration as above, load-bearing pallets discharged from the pallet receiver can easily be carried by means of a conveyor to a location where they can be returned to the shippers.

### Brief Description of Drawings

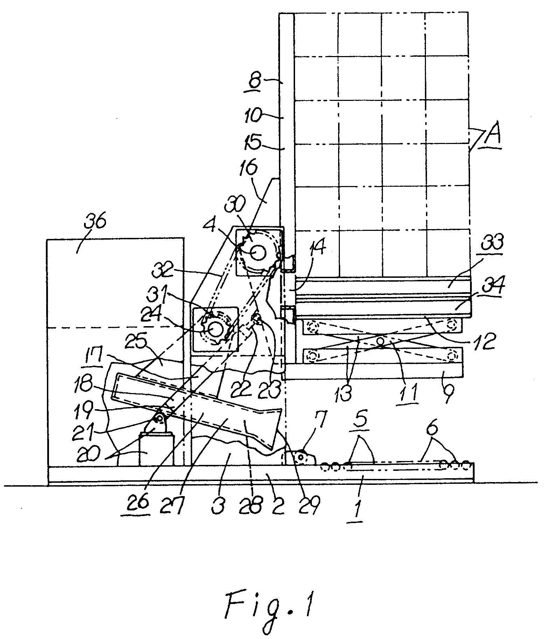

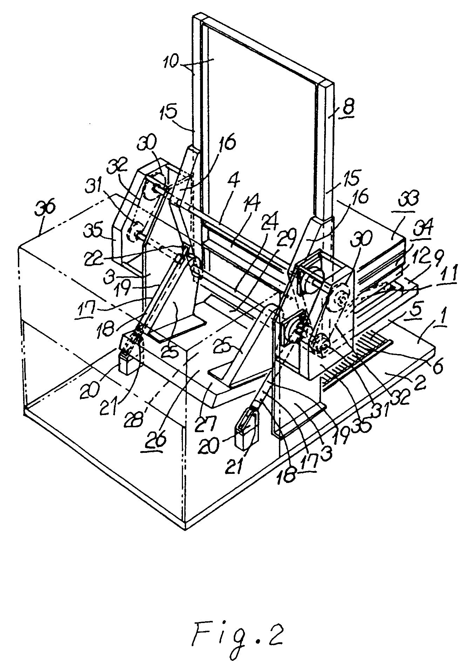

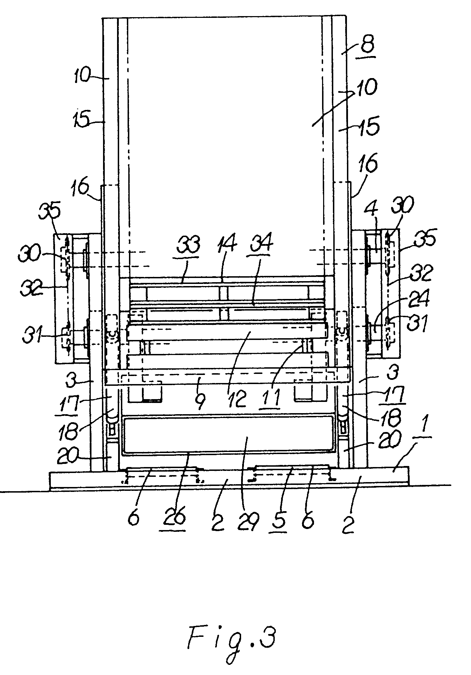

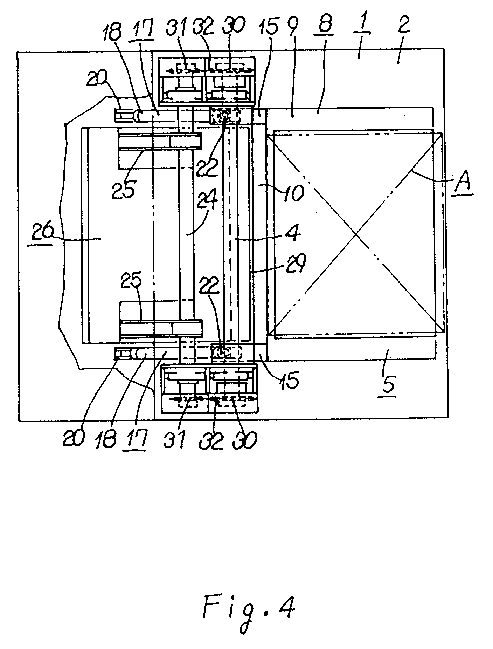

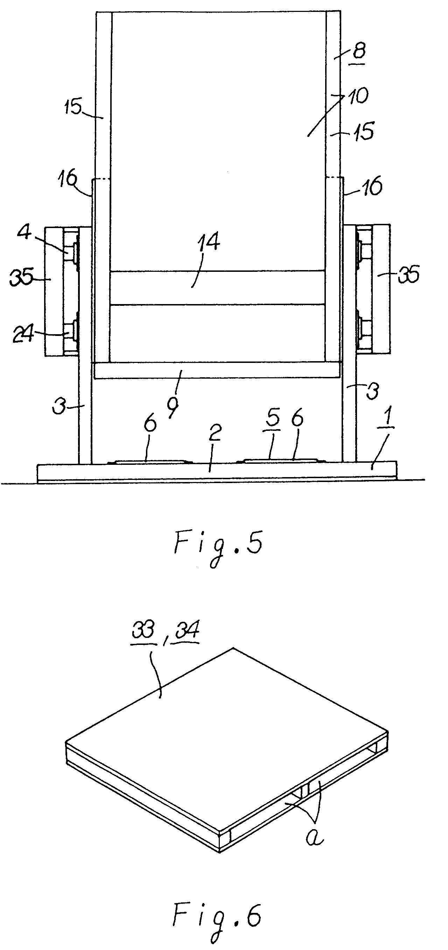

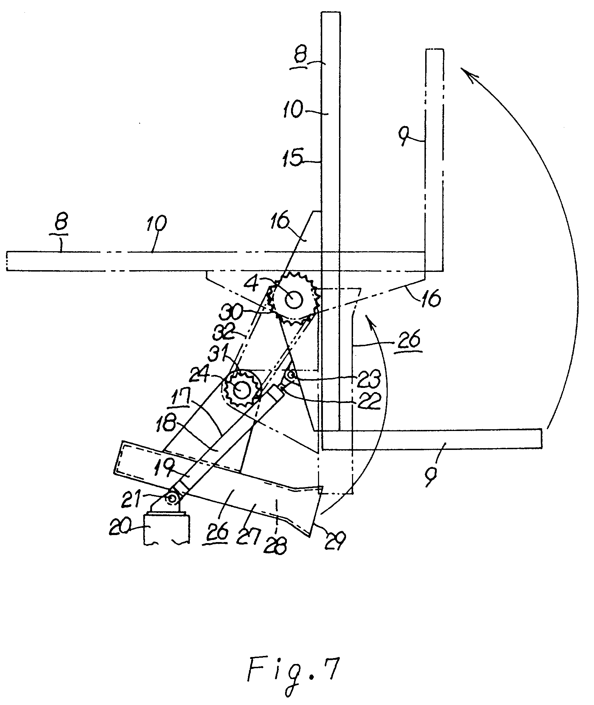

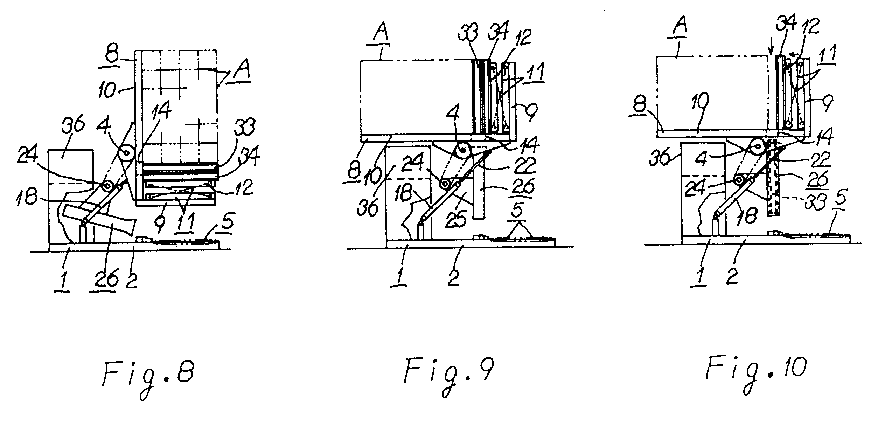

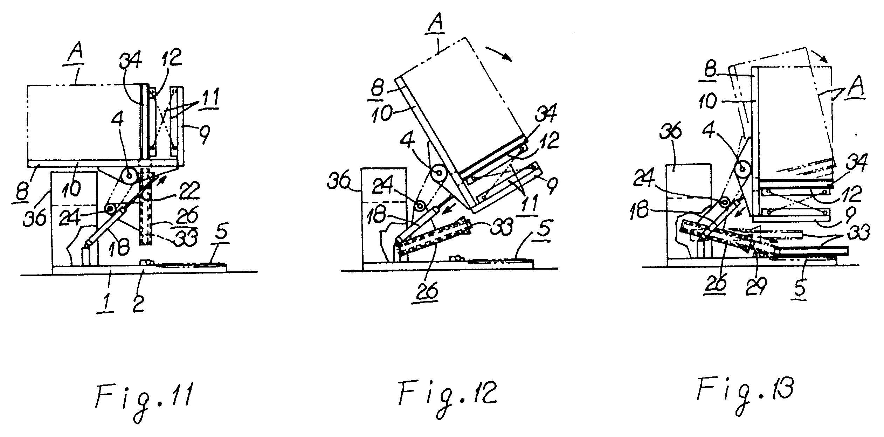

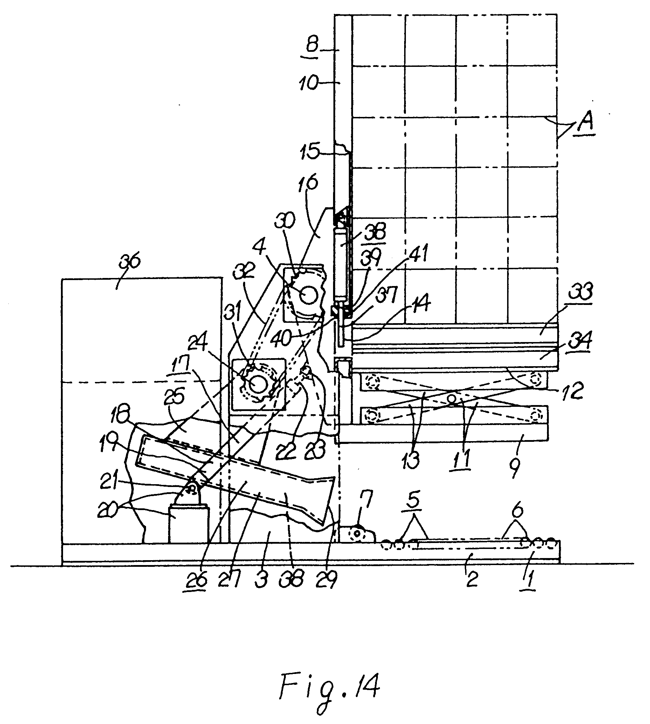

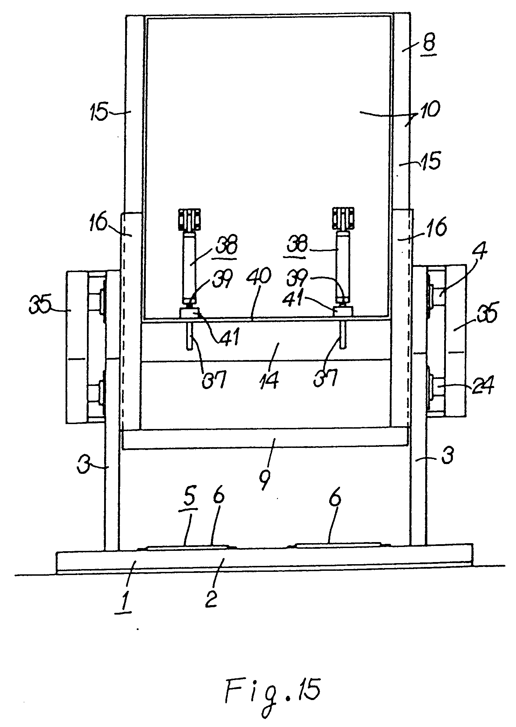

Fig. 1 is a partially cutout side view of a pallet exchanging apparatus according to an embodiment of the present invention; Fig. 2 is a perspective of same viewed from the rear; Fig. 3 is a front view of same; Fig. 4 is a top view of same; Fig. 5 is a front view of a stand of same; Fig. 6 is a perspective of a pallet of same; Fig. 7 is a side view illustrating a means of rotating said stand; Fig. 8 is a schematic illustration to explain the loaded state of the system; Fig. 9 is a schematic illustration to explain the state where the stand is rotated to the horizontal position; Fig. 10 is a schematic illustration to explain the state where the load-bearing pallet has been dropped; Fig. 11 is a schematic illustration to explain the state where an exchange pallet is in contact with the load; Fig. 12 is a schematic illustration to explain the state where said stand and a pallet receiver are rotated downward; Fig. 13 is a schematic illustration to explain the state where the stand and the receiver are returned to the initial position; Fig. 14 is a partially cutout side view of a pallet exchanging apparatus according to another embodiment of the invention; and Fig. 15 is a rear view of same.

### Best Mode for Carrying Out the Invention

Next, the configuration of an embodiment of the invention is explained hereunder, referring to the drawings.

Numeral 1 denotes a body of the exchanging apparatus, which has a base 2. A pair of vertically extending supporting frames 3 are mounted on base 2 and fastened as an integral body with base 2, at the opposing sides of base 2 so as to face each other. A shaft 4 which serves as the rotation axis is rotatably laid across the upper ends of the respective supporting frames 3.

A conveyor 5 for carrying objects forward is disposed on base 2, at a location in front of supporting frames 3. Conveyor 5 is comprised of numerous conveyor rollers 6, which are arranged parallel to one another and rotatably attached to base 2 by means of shafts, and a lead-in roller 7 located behind rollers 6 and rotatably attached to base 2 by means of a shaft. The upper end of lead-in roller 7 is located higher than the top of each roller 6.

Numeral 8 denotes a stand comprised of a horizontal base frame 9 and a vertical end frame 10 which extends upward from an end of the upper surface of horizontal base frame 9. Therefore, stand 8 is in the shape of an L when viewed from a side. A lifter 11 for supporting a load-bearing platform 12 is disposed on horizontal base frame 9. Load-bearing platform 12 supported by lifter 11 is capable of moving up and down.

Lifter 11 is provided with a pair of rotatable cross links 13 and hydraulic cylinders (not shown) for respectively rotating these cross links 13 in the vertical direction. Each cross link 13 is disposed at either side of lifter 11, between horizontal base 9 and load-bearing platform 12, with the upper and lower ends at one end of cross link 13 rotatably attached to load-bearing platform 12 and horizontal base 9 respectably by means of shafts, and the upper and lower rollers (not shown) provided at the other end of cross link 13 respectively caught by load-bearing platform 12 and horizontal base 9 in such a manner as to be capable of moving along the platform and the horizontal base.

A pallet drop opening 14 which is large enough to permit a pallet (to be described later) to drop therethrough is formed at the lower part of vertical end frame 10, at a location above the one end of load-bearing platform 12, i. e. the end opposite where the aforementioned rollers are disposed. Pallet drop opening 14 is a narrow, oblong opening larger than a pallet (to be described later) both in the width and the height.

An essentially triangular bracket 16 is formed on each one of the two side frames 15 of vertical end frame 10 as an integral body with side frame 15 and projects rearward from a location roughly in the lower half of side frame 15. In the state where vertical side frame 10 is vertically erected, each bracket 16 is integrally affixed to rotation axis shaft 4 so that rotation of rotation axis shaft 4 vertically rotates stand 8 around rotation axis shaft 4. Load-bearing platform 12 is at the horizontal position when objects are loaded.

Numeral 17 denotes a stand rotation means which comprises a pair of hydraulic cylinders 18 disposed on both sides of the pallet exchanging apparatus. The base end of body 19 of each hydraulic cylinder 18 is attached through a supporting shaft 21 to a fixture 20 which protrudes from base 2 so that each hydraulic cylinder 18 is capable of rotating up and down around shaft 21. The two fixtures 20 are located on the two respective sides of base 2, on the rear part thereof. Further, by means of a supporting shaft 23, each bracket 16 is rotatably attached to the end of a retractable rod 22 of each respective hydraulic cylinder 18.

With the configuration as above, extension or contraction of rods 22 of both hydraulic cylinders 18 rotates rotation axis shaft 4 through both brackets 16 so that stand 8 rotates upward or downward, with rotation axis shaft 4 as the fulcrum of the rotation. At the time of exchanging pallets, load-bearing platform 12, which is at the horizontal position when loaded with objects, is shifted to the vertical position with pallet drop opening 14 shifted to the bottom-facing position.

Numeral 24 denotes a rotation shaft which rotates together with rotation of rotation axis shaft 4. Rotation shaft 24 is located below and behind rotation axis shaft 4, extending parallel thereto. Rotation shaft 24 is rotatably laid across a pair of supporting frames 3 disposed on both sides. Each end of rotation shaft 24 is integrally fastened to an vertically extending bracket 25. The bottoms of both brackets 25 are integrally fastened to a pallet receiver 26 which receives a load-bearing pallet (described later) falling through pallet drop opening 14.

Pallet receiver 26 has a flat, rectangular body 27 whose hollow inside serves as a container portion 28 having such a dimension as to easily permit a load-bearing pallet to be inserted therein and removed therefrom. A receiving mouth 29 for receiving a load-bearing pallet spreads outward at the open end of container portion 28.

When loading objects, pallet receiver 26 is in the stand-by mode where pallet receiver 26 is inclined with the end where receiving mouth 29 is located being lowered.

A larger sprocket 30 is affixed to each end of rotation axis shaft 4, while a sprocket 31 having a diameter smaller than that of sprocket 30 is affixed to each end of rotation shaft 24, sprockets 30 and 31 which are located on each side being on the same vertical plane. On each side, an endless chain 32 is looped around large sprocket 30 and small sprocket 31 on each side.

Large sprockets 30 at both ends of rotational axis shaft 4 are in such a gear ratio with small sprocket 31 at both ends of rotation shaft 24 that when stand 8 is rotated upward by approximately 90° from the vertical position in the loading mode to the horizontal position in the pallet exchanging mode, pallet receiver 26 is rotated upward by approximately 140° from the inclined position, at a specified angle with its receiving mouth 29 located at the lower end, to the position where receiving mouth 29, having been moved to a position underneath stand 8, faces pallet drop opening 14.

Together with upward rotation of stand 8 around rotation axis shaft 4, pallet receiver 26 rotates upward around rotation shaft 24 at a speed faster than the rotation of stand 8, more precisely at a rate corresponding to the aforementioned gear rate.

Numerals 33 denotes a load-bearing pallet transported from the shipper with objects loaded thereon, and numeral 34 denotes an exchange pallet prepared at the load receiving side. Numeral 35 denotes a cover which covers large sprocket 30, small sprocket 31 and endless chain 32 at each side of the system. Although various load-bearing pallets 33 and exchange pallets 34 may be used depending objects A to be loaded, they are assumed to have the same shape for the sake of convenience in this explanation. Each pallet is provided with a fork insertion portion (a) so as to permit the fork of a fork lift or the like to be inserted therein.

Further, numeral 36 denotes a hydraulic control unit provided on base 2. Hydraulic control unit 36 controls the function of the hydraulic cylinders of lifter 11, which moves load-bearing platform 12 up and down, and also the function of hydraulic cylinders 18 at both sides of the apparatus.

Next, the function of the embodiment is explained hereunder.

When loading objects on a pallet exchanging apparatus that is installed at a load receiving side, hydraulic cylinders 18 disposed on base 2 are actuated to contract respective rods 22. As a result of this contraction of rods 22, stand 8 is rotated downward around rotation axis shaft 4 until load-bearing platform 12 of stand 8 reaches the horizontal position, where operation of both hydraulic cylinders 18 is stopped.

Meanwhile, as rotation axis shaft 4 is rotated together with the downward rotation of stand 8, rotation of large sprockets 30 at both ends of rotation axis shaft 4 is transmitted through endless chains 32 and small sprockets 31 at both ends of rotation shaft 24 to rotation shaft 24 so that pallet receiver 26 affixed to rotation shaft 24 is rotated downward.

The downward rotation of pallet receiver 26 is terminated in the state where load-bearing platform 12 of stand 8 reaches the horizontal position, and pallet receiver 26 comes to a standstill at the position inclined at a specified angle, with receiving mouth 29 lowered towards conveyor 5.

An exchange pallet 34 is placed on load-bearing platform 12 of stand 8, and a load-bearing pallet 33 on which objects A have been loaded at the shipper side is conveyed onto exchange pallet 34 by means of, for example, a fork lift.

When exchanging pallets, hydraulic cylinders 18 on both sides are actuated to extend rods 22. As a result of this extension of rods 22, stand 8 is rotated upward around rotation axis shaft 4, with vertical side frame 10 of stand 8 moved from the vertical position to the horizontal position. When load-bearing platform 12 of stand 8 has been shifted from the horizontal position to the vertical position, where pallet drop opening 14 of stand 8 faces downward, operation of both hydraulic cylinders 18 is stopped.

At that time, load-bearing pallet 33 loaded with objects A is located at pallet drop opening 14. However, as lifter 11 pushes exchange pallet 34 against load-bearing pallet 33 with load-bearing platform 12 therebetween, load-bearing pallet 33 is supported by the frictional force between these pallets and the load-bearing platform. Therefore, there is no danger of load-bearing pallet 33 falling through pallet drop opening when pallet drop opening 14 is simply at the bottom-facing position.

Meanwhile, as rotation axis shaft 4 is rotated together with the upward rotation of stand 8, rotation of large sprockets 30 at both ends of rotation axis shaft 4 is transmitted through endless chains 32 and small sprockets 31 at both ends of rotation shaft 24 to rotation shaft 24 so that pallet receiver 26 affixed to rotation shaft 24 is rotated upward.

The upward rotation of pallet receiver 26 is terminated in the state where load-bearing platform 12 of stand 8 reaches the vertical position, and pallet receiver 26 comes to a standstill at an approximately vertical position, where receiving mouth 29 of pallet receiver faces pallet drop opening 14.

Then, when the rods are contracted by operation of the hydraulic cylinders of lifter 11 that supports load-bearing platform 12, load-bearing pallet 33 becomes relieved of the pushing force of exchange pallet 34 that has been pressed by lifter 11 against load-bearing pallet 33 with load-bearing platform 12 therebetween. As a result, load-bearing pallet 33 becomes separated from objects A and falls through pallet drop opening 14. Load-bearing pallet 33 fallen through pallet drop opening 14 is received through receiving mouth 29 into container portion 28 of pallet receiver 26.

When load-bearing pallet 33 is dropped through pallet drop opening 14, the hydraulic cylinders of lifter 11 are actuated to extend the rods. As the rods are extended, load-bearing platform 12 of lifter 11 is advanced until exchange pallet 34 on load-bearing platform 12 is pressed against objects A that were pushed by load-bearing pallet 33. Therefore, when exchange pallet 34 is advanced to the location above pallet drop opening 14, exchange pallet 34 supported between load-bearing platform 12 and objects A without the danger of falling through pallet drop opening 14.

Then, both hydraulic cylinders 18 are actuated to contract rods 22. As a result of this contraction of rods 22, stand 8 is rotated downward around rotation axis shaft 4 until load-bearing platform 12 of stand 8 reaches the horizontal position, where operation of both hydraulic cylinders 18 is stopped.

At that time, as stand 8 is rotated downward in the state where objects A are pressed and supported by exchange pallet 34 instead of load-bearing pallet 33, there is no danger of objects A collapsing during this downward rotation. This horizontal standstill position of load-bearing platform 12 is identical to the horizontal position at the time of loading objects at the load receiving side.

Meanwhile, as rotation axis shaft 4 is rotated together with the downward rotation of stand 8, rotation of large sprockets 30 at both ends of rotation axis shaft 4 is transmitted through endless chains 32 and small sprockets 31 at both ends of rotation shaft 24 to rotation shaft 24 so that pallet receiver 26 containing load-bearing pallet 33 is rotated downward by rotation shaft 24.

The downward rotation of pallet receiver 26 is terminated in the state where load-bearing platform 12 of stand 8 reaches the horizontal position, and pallet receiver 26 comes to a standstill with its receiving mouth 29 lowered towards conveyor 5. Guided by the inclination of pallet receiver 26, load-bearing pallet 33 is automatically discharged through receiving mouth 29 onto conveyor 5.

Thus, a load-bearing pallet 33 arrived from the shipper side with objects A loaded thereon is exchanged for an exchange pallet 34 at the load receiving side, and exchange pallet 34 loaded with objects A is supported on load-bearing platform 12 at the object loaded position. Objects A on exchange pallet 34 prepared at the load receiving side are then carried to a specified location at the load receiving side while being supported by the fork of a fork lift or other similar equipment at the load receiving side.

Load-bearing pallet 33 of the shipper which has been separated from objects A and moved onto conveyor is returned to the shipper by using a transporting means at the load receiving side, such as the fork of a fork lift or the like, as well as the truck which has transported objects A from the shipper or any other suitable transportation means.

As described above, load-bearing pallets 33 of a shipper are transported with objects A loaded thereon to a load receiving side, where load-bearing pallets 33 are exchanged for exchange pallets prepared at the load receiving side and sent back to the shipper. Therefore, load-bearing pallets 33 of the shipper can continuously be used to transport objects without accumulating on the load receiving side. Meanwhile at the receiver's side, objects A shipped from the shipper are handled by using exchange pallets 34 of the receiver.

Although the embodiment is explained referring to the above embodiment, wherein a load-bearing pallet 33 shipped from the shipper with objects A loaded thereon is dropped directly through pallet drop opening 14 of stand 8 when relieved of the pushing pressure of lifter 11, a configuration wherein pallet drop opening 14 of stand 8 can be opened and closed by stoppers 37 so as to be opened when load-bearing pallet 33 is dropped is also possible.

In the abovementioned alternative configuration, as shown in Figs. 14 and 15, a hydraulic cylinder 38 may be fastened to each outer side of vertical side frame 10 of stand 8, with the ends of rods 39 of the two hydraulic cylinders 38 so formed as to serve as stoppers 37, which are removably inserted into respective guides 41 provided at both sides of a mouth edge frame 40 of pallet drop opening 14. Hydraulic cylinders 38 on the two opposing sides of stand 8 are both controlled by a hydraulic control unit 36 which has the same configuration as control unit 36 according to the embodiment described above.

With the configuration as above, by means of actuating hydraulic cylinders 38 to extend or contract rods 39, stoppers 37 extending from respective rods 39 are moved towards or away from pallet drop opening 14 in such a manner as to block or open pallet drop opening 14.

Therefore, when dropping a load-bearing pallet 33 of the shipper through pallet drop opening 14, pallet drop opening 14 is opened by stoppers 37, thereby permitting load-bearing pallet 33 to fall through pallet drop opening 14. This configuration is particularly effective in case of a system which does not call for pressing a load-bearing pallet 33 of a shipper against objects A to support the objects by means of frictional force.

### Industrial Applicability

As described above, a pallet exchanging apparatus according to the present invention permits a receiver of objects to exchange a load-bearing pallet arrived from a shipper with the objects loaded thereon for an exchange pallet at the load receiving side and place the objects on the exchange pallet. Therefore, a pallet exchanging apparatus according to the present invention is suitable to be used in the field of distribution system to receive and send out objects by using pallets.

## Claims

1. A pallet exchanging apparatus comprising:
a main body of the apparatus;
a stand which has a vertically rotatably load-bearing platform for supporting an exchange pallet thereon and a pallet drop opening through which a load-bearing pallet placed on said exchange pallet is dropped, said load-bearing platform attached to said main body of the apparatus by means of a shaft, and said pallet drop opening being located above an end of aid load-bearing platform;
a stand rotation means which is mounted on said main body of the apparatus and rotates said stand so as to move said load-bearing platform of said stand to the horizontal position when loading objects and, when changing pallets, to the vertical position where said pallet drop opening faces downward; and
a vertically rotatable pallet receiver attached to said main body of the apparatus by means of shafts, said pallet receiver being so positioned as to face said pallet drop opening and accept a load-bearing pallet dropped through said pallet drop opening when pallets are exchanged.

2. A pallet exchanging apparatus as claimed in claim 1, wherein said stand is formed in the shape of an L comprising a horizontal base frame and a vertical end frame which is provided with a pallet drop opening, said load-bearing platform being above said horizontal base plate in such a manner as to be capable of being elevated and lowered by a lifter, and said pallet drop opening being formed in said vertical end frame.

3. A pallet exchanging apparatus as claimed in claim 2, wherein said lifter moves said load-bearing platform forward when a load-bearing pallet is dropped through said pallet drop opening so that an exchange pallet on said load-bearing platform comes into contact with the objects which were loaded on said load-bearing pallet.

4. A pallet exchanging apparatus as claimed in claim 2 or claim 3, wherein said pallet drop opening is provided with a movable stopper or stoppers for supporting a load-bearing pallet to be dropped through said pallet drop opening.

5. A pallet exchanging apparatus as claimed in claim 1 or claim 2, wherein said stand rotation means is comprised of hydraulic cylinders so that extension and contraction of rods of said hydraulic cylinders rotates said stand up and down around a rotation axis shaft laid across and attached to said main body of the changing apparatus.

6. A pallet exchanging apparatus as claimed in claim 1 or claim 2, wherein said pallet receiver is so supported by a rotation shaft which is laid across and attached to said main body of the changing apparatus as to be capable of rotating up and down around said rotation shaft so that said pallet receiver is rotated upward together with downward shifting of said pallet drop opening until said pallet receiver faces said pallet drop opening that has been shifted to the bottom position.

7. A pallet exchanging apparatus as claimed in any one of claims selected from among claim 1, claim 5 and claim 6, wherein said main body of the exchanging apparatus is provided with a conveyor for carrying load-bearing pallets discharged from said pallet receiver.
